# EUROPÄISCHE PATENTSCHRIFT

(11) **EP 3 595 833 B1**
(45) Veröffentlichungstag und Bekanntmachung des Hinweises auf die Patenterteilung: **25.05.2022**
(21) Anmeldenummer: 18714951.3
(22) Anmeldetag: 26.02.2018
(51) Int. Cl.: B23B 31/00, B23B 31/02, B23B 31/113

(54) **SCHNEIDSYSTEM FÜR DIE ROTATORISCHE BEARBEITUNG EINES WERKSTÜCKS**
CUTTING SYSTEM FOR ROTATIONALLY MACHINING A WORKPIECE
SYSTÈME DE COUPE DESTINÉ À L'USINAGE ROTATIF D'UNE PIÈCE

(30) Priorität: 14.03.2017 AT 5017 U
(43) Veröffentlichungstag der Anmeldung: 22.01.2020
(73) Patentinhaber: Ceratizit Austria Gesellschaft m.b.H., 6600 Reutte (AT)
(72) Erfinder: BURTSCHER, Peter, A-6600 Reutte (AT); PRAST, Josef, A-6600 Reutte (AT)
(74) Vertreter: Ciesla, Dirk
(86) Internationale Anmeldenummer: PCT/AT2018/000010
(87) Internationale Veröffentlichungsnummer: WO 2018/165685

(56) Entgegenhaltungen:
- WO-A1-01/07186
- WO-A1-2007/118626
- WO-A1-2015/171721
- DE-A1-102012 204 491
- US-A1- 2011 194 907
- US-A1- 2015 314 379

## Beschreibung

Die vorliegende Erfindung betrifft ein Schneidsystem mit einem Schneidwerkzeug und einer Axial-Sicherungsvorrichtung nach dem Oberbegriff von Anspruch 1 sowie ein Verfahren zum Einsetzen eines Schneidwerkzeugs in eine Axial-Sicherungsvorrichtung nach dem Oberbegriff von Anspruch 11.

Es ist bekannt, dass Schneidwerkzeuge eingesetzt werden, um eine rotatorische Bearbeitung eines Werkstücks durchzuführen. Dabei handelt es sich insbesondere um Schneidwerkzeuge, welche als Fräser oder Bohrer ausgebildet sein können. Eine rotatorische Bearbeitung des Werkstücks ist dabei insbesondere so zu verstehen, dass das Schneidwerkzeug für die spanende Bearbeitung selbst eine Rotation um seine Schaftachse durchführt. Dabei lassen sich derartige Schneidwerkzeuge von bekannten Schneidwerkzeugen für andere Bearbeitungsmethoden, zum Beispiel mit rotierenden Werkstücken bei Drehverfahren, unterscheiden.

Nachteilhaft bei den bekannten Lösungen ist es, dass Schneidwerkzeuge, welche eine rotatorische Bearbeitung von Werkstücken durchführen sollen, unterschiedlichen Belastungen ausgesetzt sind, und diesen unterschiedlichen Belastungen mit unterschiedlichen mechanischen Lösungen begegnen. Neben einer Abstützung der tatsächlichen Schneidkraft, welche auf das Werkstück aufgebracht wird, ist üblicherweise eine winkelige Anstellung der einzelnen Schneidflächen von solchen Schneidwerkzeugen gegeben. Dies führt dazu, dass bei der Zerspanung mit dem Werkzeug nicht nur die Schneidkraft abgestützt werden muss, sondern durch die beschriebene winklige Anstellung eine Auszugskraft auf das Schneidwerkzeug wirkt. Mit anderen Worten ist das Schneidwerkzeug während seiner Rotation bestrebt, entlang dieser Kraft aus einer entsprechenden Werkzeugaufnahme herausgezogen zu werden. Bei bekannten Schneidwerkzeugen wird dies durch eine Auszugssicherung dadurch gelöst, dass üblicherweise seitlich mithilfe einer Schraube eine Fixierung des Schneidwerkzeugs durchgeführt wird, wie es z.B. insbesondere bei sogenannten Weldon-Aufnahmen der Fall ist. Diese von der Seite eingesetzte Schraube mit einer Klemmfunktionalität verhindert nun, dass die Auszugskraft das Schneidwerkzeug aus der entsprechenden Werkzeugaufnahmevorrichtung herausziehen würde. Es ist jedoch nachteilhaft, dass sich durch das seitliche Einwirken der Schraubkraft und die entsprechende Klemmfunktionalität der Rundlauf des Schneidwerkzeugs verschlechtert. Insbesondere kann dies dazu führen, dass sich die Schaftachse aus der Mitte der Werkzeugaufnahmevorrichtung heraus verschiebt bzw. verkippt und damit die Schaftachse nicht mehr koaxial mit der zentralen Rotationsachse der Werkzeugaufnahmevorrichtung verläuft. Dies kann zu einer verschlechterten Qualität der bearbeiteten Werkstücke führen. Darüber hinaus kann es dazu führen, dass das Schneidwerkzeug mit einer geringeren Einsatzdauer verwendet werden kann. Der Verschleiß eines Schneidwerkzeugs mit nicht koaxialer Schaftachsenausrichtung ist ebenfalls erhöht.

WO 2007/118626 A1 beschreibt ein Schneidsystem nach dem Oberbegriff von Anspruch 1 und ein Verfahren zum Einsetzen eines Schneidwerkzeugs in eine Axial-Sicherungsvorrichtung nach dem Oberbegriff von Anspruch 11.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise ein Schneidwerkzeug mit einer einfachen Auszugssicherung zu versehen und gleichzeitig einen möglichst guten Rundlauf für das Schneidwerkzeug zu gewährleisten.

Die voranstehende Aufgabe wird gelöst durch ein Schneidsystem mit den Merkmalen des Anspruchs 1 sowie ein Verfahren mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit dem Schneidwerkzeug beschrieben sind, auch in Zusammenhang mit der Axial-Sicherungsvorrichtung, dem erfindungsgemäßen Schneidsystem sowie dem erfindungsgemäßen Verfahren und jeweils umgekehrt, so dass bezüglich der Offenbarung zu den einzelnen Aspekten stets wechselseitig Bezug genommen wird bzw. werden kann.

Es ist ein Schneidwerkzeug vorgesehen für die rotatorische Bearbeitung eines Werkstücks. Das Schneidwerkzeug weist einen Werkzeugschaft mit einem Schneidende für eine spanende Bearbeitung des Werkstücks auf. Weiter ist ein Aufnahmeende vorgesehen zur Aufnahme entlang einer Schaftachse des Werkzeugschaftes in einer Werkzeugaufnahmevorrichtung. Das Schneidwerkzeug zeichnet sich dadurch aus, dass das Aufnahmeende zumindest einen Axial-Sicherungsabschnitt für eine Sicherung gegen einen axialen Auszug entlang der Schaftachse in einer Auszugsrichtung aufweist. Darüber hinaus ist das Aufnahmeende mit zumindest einem Axial-Positionierungsabschnitt für eine axiale Positionierung, d.h. eine Bewegung entlang der Schaftachse, in der Auszugsrichtung versehen. Bevorzugt kann der zumindest eine Axial-Positionierungsabschnitt mit wenigstens einer Kontaktfläche ausgestattet sein, welche mit einem durch die Schaftachse als Flächennormale definierten Schaftquerschnitt einen spitzwinkligen Positionierungswinkel aufweist.

Das Schneidwerkzeug kann also in bekannter Weise zum Beispiel ein Bohrwerkzeug oder ein Fräswerkzeug sein. Für die Bearbeitung des Werkstücks wird das Schneidwerkzeug in eine Rotation um eine Rotationsachse versetzt, welche insbesondere die Schaftachse in koaxialer Ausrichtung mit einer entsprechenden Rotationsachse der Werkzeugaufnahmevorrichtung ist. Die Werkzeugaufnahmevorrichtung dient dabei in unterschiedlichster Weise der tatsächlichen Aufnahme des Schneidwerkzeugs. So kann hier eine direkte wie auch eine indirekte Aufnahme vorgesehen sein, wie sie später noch mit Bezug auf die Axial-Sicherungsvorrichtung näher erläutert wird. An dem Schneidende ist zumindest eine Schneide am Schneidwerkzeug vorgesehen, um die spanende Bearbeitung das Werkstücks durchzuführen. Entlang der Schaftachse kann nun das Aufnahmeende des Werkzeugschaftes in der Werkzeugaufnahmevorrichtung befestigt werden.

Am Aufnahmeende sind zwei unterschiedliche Funktionalitäten in unterschiedlichen geometrischen Abschnitten separat voneinander ausgebildet. Die unterschiedlichen Funktionalitäten sind dabei zum einen die Axial-Sicherung und zum anderen die Axial-Positionierung. Die Axial-Sicherung ist hier die primäre Schutzfunktionalität gegen einen axialen Auszug entlang der Schaftachse. Der Axial-Sicherungsabschnitt kann dazu zum Beispiel geometrische Ausbildungen aufweisen, welche als Vorsprünge oder Rücksprünge, zum Beispiel mit dem später noch erläuterten Formschluss, die axiale Auszugsicherung zur Verfügung stellen. Der Axial-Sicherungsabschnitt kann dabei bevorzugt als zumindest eine Vertiefung oder Nut an dem Außenumfang des Aufnahmeendes ausgebildet sein. Insbesondere wirkt dabei der jeweilige Axial-Sicherungsabschnitt mit einem entsprechenden Gegen-Sicherungsabschnitt einer Axial-Sicherungsvorrichtung der Werkzeugaufnahmevorrichtung zusammen.

Die Sicherung gegen den axialen Auszug wird dabei insbesondere als geometrische Sicherung verstanden, um nach dem Einsetzen des Aufnahmeendes in den Werkzeugschaft sicherzustellen, dass bei Belastung während der rotatorischen Bearbeitung des Werkstücks ein axialer Auszug vermieden wird. Insbesondere geht dies mit einer Bewegung des Aufnahmeendes bzw. des Axial-Sicherungsabschnitts von einer Freigabeposition in eine Sicherungsposition, in welcher gegen den axialen Auszug die Sicherungsfunktionalität gegeben ist, einher.

Separat von dem Axial-Sicherungsabschnitt ist zusätzlich ein Axial-Positionierungsabschnitt vorgesehen. Unter der Positionierung entlang der Schaftachse in der Auszugsrichtung ist dabei im Sinne der vorliegenden Erfindung eine Positionierbewegung zu verstehen. Insbesondere wechselwirkt der Axial-Positionierungsabschnitt mit dem Axial-Sicherungsabschnitt, so dass bei der Sicherungsbewegung von der Freigabeposition in die Sicherungsposition automatisch auch die Positionierbewegung durchgeführt wird. Die Positionierbewegung wird dabei verwendet, um eine Positionierung der Schaftachse in der Auszugsrichtung zur Verfügung zu stellen. Darunter ist zu verstehen, dass für die Positionierung das gesamte Schneidwerkzeug entlang der Schaftachse in der Auszugsrichtung bewegt wird. Das bedeutet, dass durch das Zusammenwirken zwischen einem Axial-Positionierungsabschnitt und einer entsprechenden Gegen-Kontaktfläche der Axial-Sicherungsvorrichtung eine in Richtung des Auszugs gerichtete Positionierbewegung automatisch mit der Sicherungsbewegung durchgeführt wird und dabei ein anfänglich vorhandenes axiales Spiel des Schneidwerkzeugs in der Werkzeugaufnahmevorrichtung eliminiert wird. Die aufeinander abgestimmte Ausbildung zwischen dem Axial-Positionierungsabschnitt bzw. der Kontaktfläche einerseits und einer zugehörigen Gegen-Kontaktfläche der Axial-Sicherungsvorrichtung andererseits bewirkt die völlige Eliminierung des axialen Spiels des aufgenommenen Schneidwerkzeugs.

Befindet sich ein Schneidwerkzeug im Einsatz, so wird nun die entsprechende Schneidkraft über das Schneidwerkzeug auch an das Aufnahmeende und dort an die Axial-Sicherungsvorrichtung übertragen. Die Kraft teilt sich dabei insbesondere in zwei Komponenten auf. Zum einen handelt es sich um die Schneidkraft, welche rotatorisch abgetragen wird. Zusätzlich handelt es sich um eine Auszugskraft, welche entlang der Schaftachse in der Auszugsrichtung das Schneidwerkzeug aus der Werkzeugaufnahmevorrichtung herausziehen möchte. Damit wirkt diese Auszugskraft in die gleiche Richtung, wie der Axial-Positionierungsabschnitt das Schneidwerkzeug in seine Sicherungsposition bewegt hat bzw. dort positioniert. Die bei der Zerspanung im Einsatz wirkende Kraft bewirkt, dass das Schneidwerkzeug spielfrei in seiner Sicherungsposition gehalten wird.

Um dies zur Verfügung zu stellen, kann die Kontaktfläche derart ausgestaltet sein, dass sie einen Positionierungswinkel in der definierten Weise zum Schaftquerschnitt aufweist, welcher spitzwinklig ausgebildet ist. Durch diese spitzwinklige Ausbildung wird nun sichergestellt, dass zum Beispiel durch eine Montagebewegung in rotierender Weise nicht nur eine Rotationsbewegung für die Ausbildung der Sicherung mithilfe des Axial-Sicherungsabschnitts zur Verfügung gestellt wird, sondern zusätzlich nach dem Prinzip zueinander bewegter schiefer Ebenen auch eine Hubbewegung aus der Werkzeugaufnahmevorrichtung in Auszugsrichtung heraus. Diese doppelte Bewegung, also die Rotation und die Hubbewegung, wird durch zwei separate Bauteilabschnitte, nämlich den Axial-Sicherungsabschnitt einerseits und den Axial-Positionierungsabschnitt andererseits zur Verfügung gestellt und bringt auf dieser Weise in kostengünstiger und einfacher Weise die doppelte Sicherungsfunktionalität mit sich.

Neben der erhöhten Sicherheit wird durch die Axial-Positionierung mithilfe des Axial-Positionierungsabschnitts auch keinerlei Einfluss genommen auf den Rundlauf bzw. die Ausrichtung der Schaftachse relativ zur Werkzeugaufnahmevorrichtung. Neben einer verbesserten Sicherungsfunktionalität ist ein verbesserter Rundlauf bei gleichzeitig reduzierter Komplexität des gesamten Schneidwerkzeugs gegeben.

Die Kontaktfläche kann insbesondere in Form einer ebenen Fläche eine Gegen-Kontaktfläche kontaktieren, die z.B. als Vorsprung ausgebildet sein kann. Andererseits kann die Kontaktfläche z.B. auch selbst an einen Vorsprung ausgebildet sein, der insbesondere eine eben Gegen-Kontaktfläche kontaktieren kann. Wie später noch erläutert wird, kann dabei die Kontaktfläche bei der Kontaktierung mit der Gegen-Kontaktfläche eine Gleitfunktionalität zur Verfügung stellen. Dabei ist insbesondere nur eine der beiden Kontaktflächen, also die Kontaktfläche oder die Gegen-Kontaktfläche, als Fläche bzw. ebene Fläche ausgebildet. Selbstverständlich können auch andere Flächen, zum Beispiel Kugeloberflächen oder gekrümmte Flächen vorteilhaft sein, um konstante Berührungen über unterschiedliche Bewegungsverläufe in punktförmiger und/oder linienförmiger Weise zur Verfügung stellen zu können. Dabei ist grundsätzlich unerheblich, in welcher Weise die Kontaktfläche die Gegen-Kontaktfläche kontaktiert. Bevorzugt ist jedoch die später noch erläuterte gleitende Kontaktierung zwischen diesen beiden Bauteilabschnitten unter Nutzung des Prinzips schiefer Ebenen.

Bei dem Schneidwerkzeug weist die Kontaktfläche eine Flächenausrichtung auf für eine Positionierungstranslation entlang der Schaftachse bei einer Rotation um die Schaftachse zwischen einer Freigabeposition und einer Sicherungsposition. Wie bereits einleitend erwähnt worden ist, handelt es sich hierbei um die beschriebene Schubumkehr. Die Positionierungsbewegung führt also dazu, dass durch die Wechselwirkung zwischen Kontaktfläche und Gegen-Kontaktfläche diese Positionierungsbewegung durchgeführt wird. Mit anderen Worten dient die Positionierungsbewegung dazu, das gesamte Schneidwerkzeug entlang der Schaftachse translatorisch zu bewegen bzw. das anfänglich vorhandene Spiel vollständig zu eliminieren. Bei der Bewegung in die Sicherungsposition wird das Schneidwerkzeug eine kleine Bewegung aus der Werkzeugaufnahmevorrichtung herausbewegt, sodass das anfänglich vorhandene Spiel völlig eliminiert wird. Dies stellt in Vergleich zu Lösungen, bei denen bei einer Bewegung in eine Sicherungsposition eine Bewegung entgegen der Auszugsrichtung erfolgt, die eine Schubumkehr dar. Der bereits eingeführte Positionierungswinkel ist dabei in spitzer Weise ausgeführt und vorzugsweise geringer als ca. 30°. Auch sind noch geringere Winkelbereiche, zum Beispiel im Bereich zwischen 5° und 15°, denkbar, da bereits geringe Hubunterschiede für die Positionierungsbewegung nach dem Prinzip schiefer Ebenen die Funktionalität zur Verfügung stellen können.

Ein weiterer Vorteil kann es sein, wenn die Kontaktfläche als Gleitfläche ausgebildet ist für ein Abgleiten einer Gegen-Kontaktfläche einer Axial-Sicherungsvorrichtung einer Werkzeugaufnahmevorrichtung bei der Positionierungsbewegung. Das bedeutet, dass durch das Abgleiten ein besonders einfaches und kostengünstiges Konstruieren des Schneidwerkzeugs möglich wird. Aufwendige Lagerungsfunktionalitäten sind hier nicht notwendig. Insbesondere ist dies vorteilhaft bei der später noch erläuterten Montagebewegung in Form einer Montagerotation, welche zum Beispiel um maximal 120° durchgeführt werden kann. Dies führt wiederum dazu, dass relativ kurze Wege durch diesen Gleitvorgang überbrückt werden müssen. Mit anderen Worten wird durch einen entsprechenden Gleitkontakt nicht nur eine kompakte, sondern auch eine effiziente und reibungsarme Bauweise möglich. Dabei ist darauf hinzuweisen, dass insbesondere die später noch erläuterten Keilwinkel so ausgestaltet sind, dass auch ein Lösen des Schneidwerkzeugs, mit einer Positionierungsbewegung von der Sicherungsposition in die Freigabeposition möglich ist, ohne eine Selbsthemmung durch entsprechende Winkelkorrelationen überwinden zu müssen.

Ein weiterer Vorteil ist es, wenn der zumindest eine Axial-Sicherungsabschnitt wenigstens eine Formschlussfläche aufweist für einen formschlüssigen Eingriff in eine Gegen-Formschlussfläche eines Gegen-Sicherungsabschnitts einer Axial-Sicherungsvorrichtung einer Werkzeugaufnahmevorrichtung. Diese Formschlussfläche ist insbesondere quer oder im Wesentlichen quer zur Auszugsrichtung angeordnet. Selbstverständlich sind auch zwei oder mehr Formschlussflächen denkbar, welche insbesondere in symmetrischer bzw. gleichmäßiger Weise am Umfang des Aufnahmeendes des Schneidwerkzeuges angeordnet sind. Die Verwendung von Formschlussfunktionalitäten in Form von Formschlussflächen ist dabei eine einfache, kostengünstige und insbesondere kompakte Möglichkeit, die Axial-Sicherungsfunktionalität zur Verfügung zu stellen. Zum Beispiel kann ein solcher Formschluss durch eine bajonettartige Ausbildung mit entsprechenden Vorsprüngen und Nuten zur Verfügung gestellt werden.

Darüber hinaus von Vorteil ist es, wenn zwischen der Formschlussfläche des Axial-Sicherungsabschnitts und der Kontaktfläche des Axial-Positionierungsabschnitts bezüglich der Umfangsrichtung ein Keilwinkel ausgebildet ist von vorzugsweise spitzer Ausbildung. Insbesondere ist der Keilwinkel im Bereich von weniger als ca. 45° und von größer als ca. 7° ausgebildet. Dies führt dazu, dass mithilfe des Keils, neben der Eliminierung axialen Spiels eine zusätzliche Klemmwirkung zur Verfügung gestellt wird, welche dem Benutzer beim Durchführen der Positionierbewegung bzw. bei der Montagebewegung das Ende derselben anzeigt. Ein Ausbilden des Keilwinkels von mehr als ca. 7° führt dazu, dass eine unerwünschte Selbsthemmung vermieden wird und damit auch die Lösebewegung von der Sicherungsposition in die Freigabeposition ohne die Überwindung einer solchen Selbsthemmung möglich wird.

Das Aufnahmeende, insbesondere der Axial-Sicherungsabschnitt, ist ausgebildet für eine Montagebewegung, insbesondere eine Montagerotation, relativ zu der Werkzeugaufnahmevorrichtung, insbesondere zu dem Gegen-Sicherungsabschnitt, zwischen einer Freigabeposition und einer Sicherungsposition. Die Montagerotation enthält dabei vorzugsweise gleichzeitig auch die Positionierungsbewegung. Mit anderen Worten werden durch eine einzige Bewegung gleichzeitig die Montagebewegung und die Positionierungsbewegung durchgeführt, da für die Montagebewegung die entsprechende Zwangsführung durch den Axial-Sicherungsabschnitt und für die Positionierbewegung die entsprechende Zwangsführung durch den Axial-Positionierungsabschnitt zur Verfügung gestellt wird. Zum Beispiel erfolgt die Montagerotation um einen definierten Rotationswinkel von ca. 120° oder weniger. Dabei gelangen die entsprechenden Axial-Sicherungsabschnitte zum Beispiel in formschlüssiger Weise in Eingriff in die Gegen-Formschlussabschnitte eines Gegen-Sicherungsabschnitts der Axial-Sicherungsvorrichtung. Während dieser Rotationsbewegung gelangt ebenfalls eine Kontaktfläche mit einer entsprechenden Gegen-Kontaktfläche der Axial-Sicherungsvorrichtung in Kontakt und wirkt so zusammen, dass durch die Rotation nicht nur der formschlüssige Eingriff zwischen den Axial-Sicherungsabschnitten und den Gegen-Formschlussflächen zur Verfügung gestellt wird, sondern gleichzeitig durch die beschriebene Schubumkehr eine Hubbewegung in Auszugsrichtung für das gesamte Schneidwerkzeug durchgeführt wird. Die Kombination aus Montagebewegung und Positionierungsbewegung ist also die Gesamtbewegung des Schneidwerkzeugs, welche einen rotatorischen Anteil durch die Montagerotation und einen translatorischen Anteil durch die Positionierungsbewegung beinhaltet.

Ein weiterer Vorteil ist es, wenn zumindest zwei Axial-Sicherungsabschnitte, insbesondere an der Umfangsfläche des Werkzeugschaftes, angeordnet sind. Die Axial-Sicherungsabschnitte können insbesondere vorteilhaft als Nuten oder Vertiefungen ausgebildet sein. Selbstverständlich sind auch drei oder mehr Axial-Sicherungsabschnitte vorsehbar, wobei drei insbesondere im Hinblick auf eine vorteilhafte radiale Zentrierung und eine Vermeidung geometrischer Überbestimmung vorteilhaft sein können. Die Anzahl der Axial-Positionierungsabschnitte kann mit der Anzahl der Axial-Sicherungsabschnitte identisch sein, um insbesondere in symmetrischer bzw. gleichmäßiger Weise die Koaxialität zwischen der Schaftachse und einer entsprechenden Rotationsachse der Werkzeugaufnahmevorrichtung beizubehalten. Die Kombination aus dem maximalen Platzbedarf, einem leichten Einrasten und einer kurzen Montagebewegung bzw. Montagerotation ist bei dieser Ausführungsform besonders vorteilhaft gegeben.

Eine Axial-Sicherungsvorrichtung weist einen Gegen-Sicherungsabschnitt zum Eingreifen in einen Axial-Sicherungsabschnitt des Schneidwerkzeugs zur Sicherung gegen einen axialen Auszug entlang der Schaftachse des Werkzeugschaftes des Schneidwerkzeugs auf. Weiter ist eine Gegen-Kontaktfläche zum Zusammenwirken mit einem Axial-Positionierungsabschnitt des Schneidwerkzeugs für eine axiale Bewegung des Schneidwerkzeugs entlang der Schaftachse in der Auszugsrichtung vorgesehen.

Es ist möglich, dass die Axial-Sicherungsvorrichtung einstückig oder im Wesentlichen einstückig mit einer Werkzeugaufnahmevorrichtung ausgebildet ist. Dabei handelt es sich um das entsprechende Spannfutter einer zugehörigen Werkzeugmaschine, in welcher die Schneidwerkzeuge eingesetzt werden sollen.

Auch denkbar ist es, dass die Axial-Sicherungsvorrichtung einen Grundkörper aufweist, welcher separat von einer Werkzeugaufnahmevorrichtung ausgebildet ist. Weiter weist ein solcher Grundkörper eine Befestigungsschnittstelle für eine Befestigung in der Werkzeugaufnahmevorrichtung auf. Eine solche Befestigungsschnittstelle kann zum Beispiel ein Gewinde sein, um die zugehörige Befestigung zur Verfügung stellen zu können. Es sind jedoch auch andere Arten der Befestigung möglich, die jedoch eine verdrehsichere Befestigung bereitstellen müssen. Durch die separate Ausbildung von der Werkzeugaufnahmevorrichtung kann der Grundkörper und damit die Axial-Sicherungsvorrichtung auch bereits bei bestehenden Werkzeugaufnahmevorrichtungen, nachgerüstet werden. Die Axial-Sicherungsvorrichtung ist hier als Einsatz bzw. als separates Bauteil ausgestaltet.

Darüber hinaus von Vorteil ist es, wenn bei einer Axial-Sicherungsvorrichtung in separater Ausführungsform der Grundkörper eine Montageschnittstelle aufweist für die Aufnahme eines Befestigungswerkzeugs zur Durchführung einer Befestigungsbewegung. Dabei ist die Montageschnittstelle insbesondere mit einem Sechskant oder einem anderen Formschlussabschnitt versehen, um in entsprechend formschlüssiger Weise, vorzugsweise in normativer Ausbildung mit einem zugehörigen Befestigungswerkzeug zusammenwirken zu können. Mithilfe der Montageschnittstelle und dem Befestigungswerkzeug ist es dabei möglich, eine entsprechende Befestigungsbewegung für die axiale Sicherungsvorrichtung ausführen zu können.

Gegenstand der vorliegenden Erfindung ist ein Schneidsystem für die rotatorische Bearbeitung eines Werkstücks mit einer Axial-Sicherungsvorrichtung und einem Schneidwerkzeug gemäß Anspruch 1. Das Schneidwerkzeug weist dabei einen Werkzeugschaft mit einem Schneidende für eine spanende Bearbeitung das Werkstücks und ein Aufnahmeende zur Aufnahme entlang einer Schaftachse des Werkzeugschaftes in einer Werkzeugaufnahmevorrichtung auf. Das Aufnahmeende greift mittels zumindest eines an einem Außenumfang des Aufnahmeendes ausgebildeten Axial-Sicherungsabschnitts in einen Gegen-Sicherungsabschnitt der Axial-Sicherungsvorrichtung ein für eine Sicherung gegen einen axialen Auszug entlang der Schaftachse in einer Auszugsrichtung. Weiter wirkt der zumindest eine Axial-Sicherungsabschnitt mittels zumindest einem an einer Stirnseite des Aufnahmeendes ausgebildeten Axial-Positionierungsabschnitt mit einer Gegen-Kontaktfläche der Axial-Sicherungsvorrichtung zusammen für eine axiale Positionierung entlang der Schaftachse in der Auszugsrichtung. Ein erfindungsgemäßes Schneidsystem kombiniert also eine Axial-Sicherungsvorrichtung mit einem oben beschriebenen Schneidwerkzeug und bringt dementsprechend die Vorteile mit sich, wie sie ausführlich mit Bezug auf diese erläutert worden sind. Dabei kann das Schneidwerkzeug insbesondere wie oben beschrieben ausgestaltet und/oder die Axial-Sicherungsvorrichtung insbesondere wie oben beschrieben ausgestaltet sein.

Ein weiterer Gegenstand der vorliegenden Erfindung ist ein Verfahren zum Einsetzen eines Schneidwerkzeugs in eine Axial-Sicherungsvorrichtung nach Anspruch 11.

Hier wird nochmals beschrieben, wie mithilfe einer einzelnen Bewegung sowohl die Montagebewegung als auch die Positionierungsbewegung durchgeführt wird, um die erfindungsgemäßen Vorteile in erläuterter Weise einfach, kostengünstig und schnell erzielen zu können.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen schematisch:
- Fig. 1: eine Ausführungsform eines Schneidwerkzeugs,
- Fig. 2: eine vergrößerte Detaildarstellung der Ausführungsform von Fig. 1,
- Fig. 3: eine Ausführungsform einer Axial-Sicherungsvorrichtung,
- Fig. 4: die Ausführungsform der Fig. 3 in Draufsicht,
- Fig. 5: eine Ausführungsform einer Werkzeugaufnahmevorrichtung mit Schneidsystem,
- Fig. 6: die Ausführungsform der Fig. 1 bis 4 mit dem Schneidwerkzeug in Freigabeposition,
- Fig. 7: die Ausführungsform der Fig. 6 während der Montagebewegung,
- Fig. 8: die Ausführungsform der Fig. 6 und 7 in der Sicherungsposition,
- Fig. 9: die Ausführungsform der Fig. 6 im schematischen Teil-Querschnitt,
- Fig. 10: die Ausführungsform der Fig. 7 im schematischen Teil-Querschnitt und
- Fig. 11: die Ausführungsform der Fig. 8 im schematischen Teil-Querschnitt.

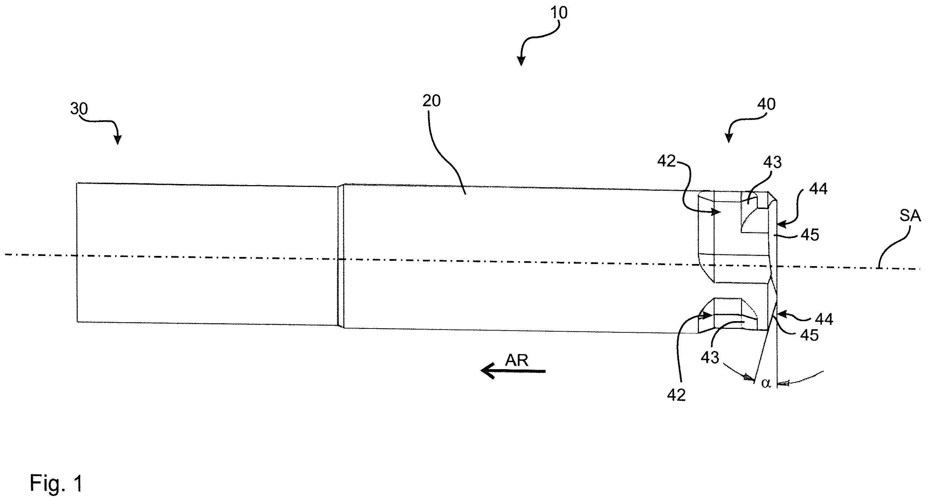

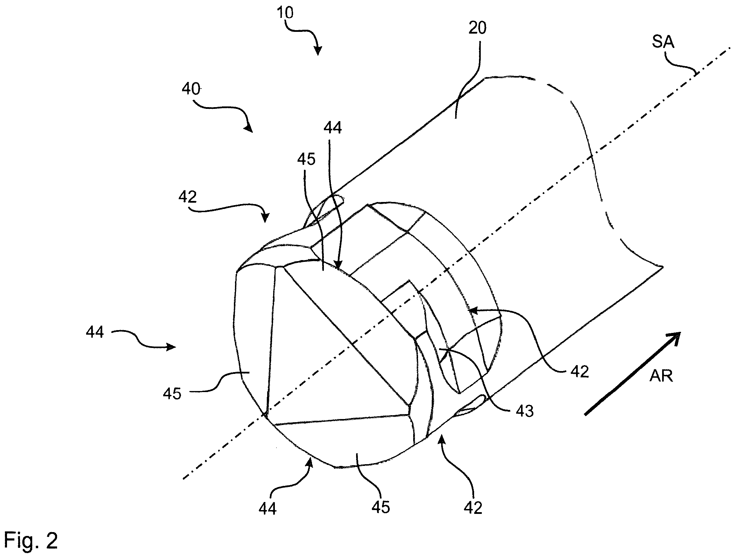

Die Fig. 1 und 2 zeigen schematisch eine Ausführungsform eines Schneidwerkzeugs 10. Die Fig. 1 zeigt dabei, dass entlang des Werkzeugschaftes 20 ein Schneidende 30 mit zumindest einer (in den Zeichnungen nicht näher dargestellten) Schneide auf der einen Seite und ein Aufnahmeende 40 am anderen Ende des Werkzeugschaftes 20 vorgesehen sind. Das Schneidwerkzeug 10 kann dabei insbesondere einstückig ausgebildet sein, z.B. als sogenanntes Vollhartmetallwerkzeug aus Hartmetall oder entsprechend aus einem anderen Material. Das Schneidwerkzeug 10 kann dabei um die zugehörige Schaftachse SA rotieren, um die gewünschte Schneidfunktionalität zur Verfügung stellen zu können. Interessant ist am Schneidwerkzeug 10 nun insbesondere das Aufnahmeende 40, welches die

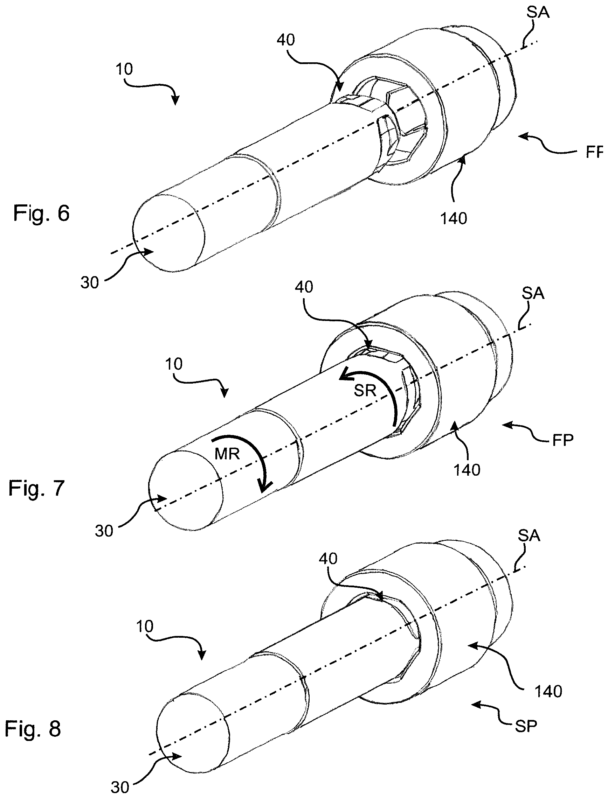

Fig. 2 in größerem Detail zeigt. Hier sind entlang des Umfangs drei Axial-Sicherungsabschnitte 42 ausgebildet. Jeder dieser Axial-Sicherungsabschnitte 42 ist für eine Formschlussfunktionalität konstruiert, so dass hier in bajonettartiger Verschlussweise eine zugehörige Formschlussfläche 43 ausgebildet wird. Wie insbesondere in Fig. 2 zu sehen ist, sind die Axial-Sicherungsabschnitte 42 bei der konkreten Ausgestaltung als L-förmige Vertiefungen in dem Außenumfang des Aufnahmeendes 40 ausgebildet, wobei ein Schenkel der L-förmigen Vertiefungen in Richtung der Stirnseite des Aufnahmeendes ausläuft und sich der andere Schenkel quer zur Schaftachse SA erstreckt, insbesondere im Wesentlichen senkrecht zu dieser erstrecken kann. Die entsprechende Funktionalität wird später noch mit Bezug auf die Fig. 6 bis 11 näher erläutert.

Ebenfalls gut zu erkennen ist in der Fig. 2, dass bei der konkret dargestellten Realisierung jedem Axial-Sicherungsabschnitt 42 ein Axial-Positionierungsabschnitt 44 zugeordnet ist. Dies ist jedoch nicht zwingend, sondern es kann z.B. auch nur ein solcher Axial-Positionierungsabschnitt 44 vorgesehen werden, Die Axial-Positionierungsabschnitte 44 sind hier in Form von Kontaktflächen 45 ausgestaltet, welche einen spitzen Winkel zu einem zugehörigen Querschnitt des Schneidwerkzeugs 10 senkrecht zur Schaftachse SA aufweisen. Insbesondere sind die Kontaktflächen 45 als abgeschrägte Teilflächen an der Stirnseite des Aufnahmeendes 40 ausgebildet. Damit kann die ebenfalls mit Bezug auf die Fig. 6 bis 11 noch zu erläuternde Positionierungsbewegung durchgeführt werden.

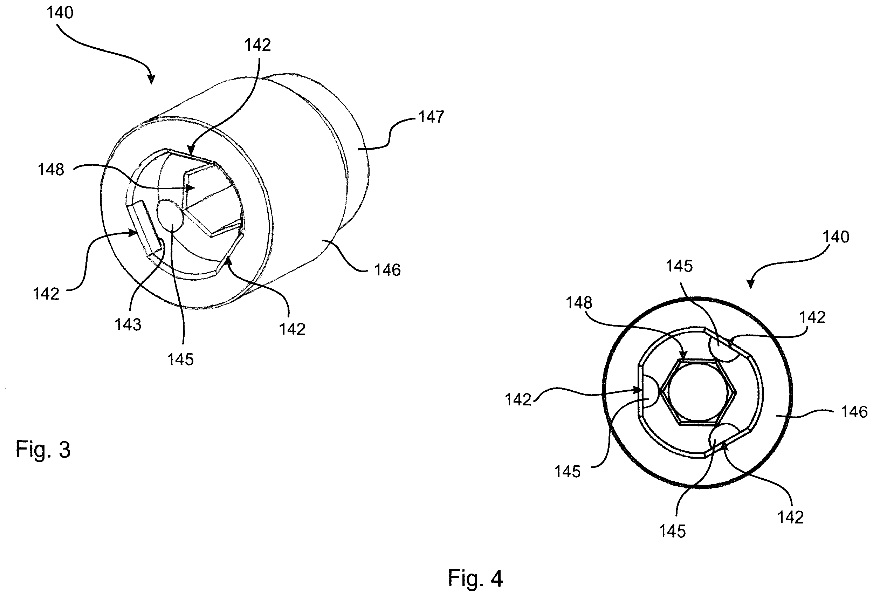

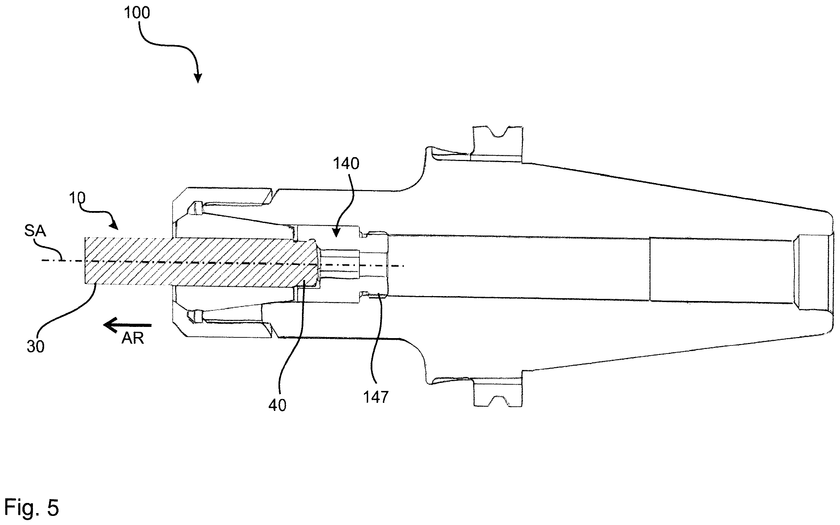

Die Fig. 3 und 4 zeigen eine Ausführungsform einer Axial-Sicherungsvorrichtung 140, welche in einer Werkzeugaufnahmevorrichtung 100 gemäß der Fig. 5 eingesetzt werden kann. Selbstverständlich kann die Axial-Sicherungsvorrichtung 140 als separates Bauteil mit einem Grundkörper 146 ausgestaltet sein, wie dies die Fig. 3 bis 5 zeigen. Jedoch ist es grundsätzlich auch denkbar, dass die Axial-Sicherungsvorrichtung 140 ein integraler, insbesondere monolithischer Bestandteil der Werkzeugaufnahmevorrichtung 100 ist. Für eine separate Ausgestaltung, wie sie die Fig. 3 bis 5 zeigen, ist mithilfe einer Befestigungsschnittstelle 147 eine Befestigungsmöglichkeit, zum Beispiel mithilfe eines Gewindes, in der Werkzeugaufnahmevorrichtung 100 gegeben. Um diese Befestigung durchführen zu können, ist hier bei der Ausführungsform gemäß der Fig. 3 bis 5 eine Montageschnittstelle 148 in Form eines Innensechskants ausgebildet, um ein Anzugsdrehmoment in einfacher Weise auf die Befestigungsschnittstelle 147 übertragen zu können. Für die erfindungsgemäße Sicherung in axialer Auszugsrichtung sowie die entsprechende Positionierungsfunktionalität sind hier die entsprechenden korrespondierenden Bauteile an eine innere Ausnehmung bzw. eine im Wesentlichen zylindrischen Vertiefung in der Axial-Sicherungsvorrichtung 140 ausgestaltet. Am inneren Umfang der Innenfläche dieser zylindrischen Vertiefung sind hier drei Gegen-Sicherungsabschnitte 142 in Form von Gegen-Formschlussflächen 143 vorgesehen. Obwohl die Realisierung von drei Gegen-Sicherungsabschnitten 142 vorteilhaft ist, können auch weniger oder mehr solche Gegen-Sicherungsabschnitte 142 vorgesehen sein. Die Gegen-Sicherungsabschnitte 142 sind bevorzugt als Vorsprünge ausgebildet, die in die innere Ausnehmung der Axial-Sicherungsvorrichtung 140 hervorstehen. Bevorzugt können die Gegen-Sicherungsabschnitte 142 dabei als längliche Vorsprünge ausgebildet sein, die sich zumindest im Wesentlichen quer, insbesondere bevorzugt senkrecht, zur vorgegebenen Rotationsachse erstrecken. Darüber hinaus ist mithilfe einer Gegen-Kontaktfläche 145 das entsprechende Gegenstück zur Kontaktfläche 45 am Aufnahmeende 40 des Schneidwerkzeugs 10 gegeben.

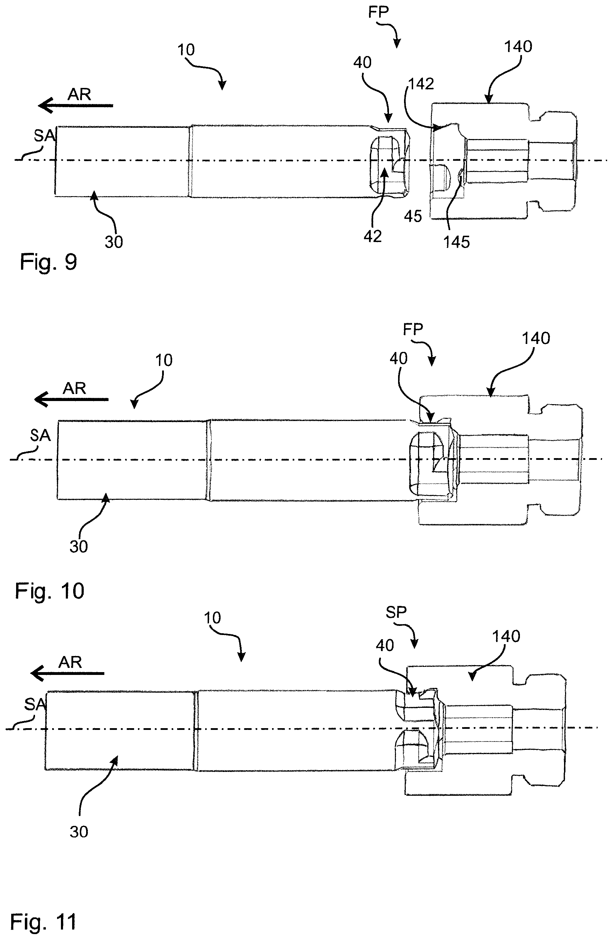

Die Fig. 6 bis 11 beschreiben nun schrittweise, wie bei einem erfindungsgemäßen Verfahren die Befestigung und damit auch die Sicherung gegen den axialen Auszug für ein Schneidwerkzeug gewährleistet wird. In einem ersten Schritt, wie er in den Fig. 6 und 9 dargestellt ist, wird entlang der Schaftachse SA das Schneidwerkzeug 10 mit seinem Aufnahmeende 40 in die zugehörige zylindrische Vertiefung der Axial-Sicherungsvorrichtung 140 eingebracht. Dabei muss die Ausrichtung der zugehörigen Axial-Sicherungsabschnitte 42 und der Axial-Positionierungsabschnitte 44 zu den Gegen-Sicherungsabschnitten 142 und den Gegen-Kontaktflächen 145 auf die Freigabeposition FP ausgerichtet sein. Sobald die Einführbewegung gemäß der Fig. 6 und 9 durchgeführt worden ist, befindet sich also die jeweilige Kontaktfläche 45 in Positionierungskontakt mit der zugehörigen Gegen-Kontaktfläche 145. Nun erfolgt nach dem Einführen eine Montagebewegung in Form einer Montagerotation des Schneidwerkzeugs entlang der Montagerichtung MR. Diese Montagerichtung MR ist dabei der Schneidrichtung SR, d.h. der für eine Bearbeitung mit dem Schneidwerkzeug 10 vorgegebenen Rotationsrichtung, entgegengerichtet. Während dieser Rotation geschehen nun mit Bezug auf das Schneidwerkzeug 10 selbst und dessen Schaftachse SA zwei grundsätzliche Bewegungen. Die erste Bewegung ist dabei die reine Montagebewegung, die die Grundfunktionalität der Sicherung gegen den axialen Auszug zur Verfügung stellt. Diese wird nachfolgend erläutert.

Durch die Rotation entlang der Montagerichtung MR wird durch die Bajonettsystematik ein formschlüssiges Eingreifen der Formschlussflächen 43 in die zugehörigen Gegen-Formschlussflächen 143 erzeugt. Dabei wird sichergestellt, dass nach dem Erreichen der Sicherungsposition SP, wie sie die Fig. 8 und 11 zeigen, eine Auszugskraft entlang der Auszugsrichtung AR über diesen Formschlussabschnitt in den Axial-Sicherungsabschnitt 42 eingebracht werden kann und sich dort abstützt. Eine entsprechende Auszugskraft und das zugehörige Abstützen führen nun dazu, dass das Schneidwerkzeug 10 in dieser Sicherungsposition SP verbleibt und nicht mehr herausgezogen werden kann.

Die zweite Bewegung ist die Positionierungsbewegung, welche gleichzeitig mit der Montagebewegung durchgeführt wird. Bei der Rotation entlang der Montagerichtung MR gleitet die jeweilige Gegen-Kontaktfläche 145 auf der Kontaktfläche 45 jeweils ab. Hier ist in den Fig. 3 und 4 gut zu erkennen, dass die Gegen-Kontaktflächen 145 bei der dargestellten Realisierung als Kugeloberflächen ausgebildet sind. Es ist unmittelbar ersichtlich, dass die Gegen-Kontaktflächen 145 auch Vorsprünge mit einer anderen Formgebung sein können. Es sind jedoch auch andere Realisierungen für das Zusammenwirken zwischen Kontaktflächen 45 und Gegen-Kontaktflächen 145 möglich, die insbesondere ebenfalls das Prinzip einer Gleitbewegung auf einer schiefen Ebene nutzen können. Bei dem Abgleiten auf der zugehörigen Kontaktfläche 45 wird eine Schubbewegung bzw. Hubbewegung auf das Schneidwerkzeug 10 aufgebracht. Dabei wird das Schneidwerkzeug 10 entlang der Auszugsrichtung AR, also aus der zylindrischen Öffnung der Axial-Sicherungsvorrichtung 140 herausbewegt. Dieses Herausbewegen ist genau in der Richtung zur Verfügung gestellt, in welcher eine entsprechende Auszugskraft von einem zugehörigen Werkstück ebenfalls wirken würde. Mit anderen Worten bewegt sich das Schneidwerkzeug von der Position der Fig. 7 und 10 zu der Position gemäß der Fig. 8 und 11 entlang der Schaftachse SA in Auszugsrichtung AR aus der Axial-Sicherungsvorrichtung 140 heraus. Dieses Herausbewegen führt nun dazu, dass sich in der Sicherungsposition SP das gesamte Schneidwerkzeug 10 in dieser herausgeschobenen Position befindet und jegliches axiales Spiel eliminiert ist. Wirkt nun eine Auszugskraft beim Einsetzen des Schneidwerkzeugs von einem Werkstück auf dieses Schneidwerkzeug 10 ein, so führt diese Auszugskraft dazu, dass ein weiteres Ziehen entlang dieser Positionierungsbewegung stattfindet, ein weiteres Auswandern aber über das Zusammenwirken von Axial-Sicherungsabschnitt 42 und Gegen-Sicherungsabschnitt 142 verhindert ist. Um jedoch in die Freigabeposition FP zurückzugelangen, müsste sich das Schneidwerkzeug 10 entgegen der Montagerichtung bewegen. Somit wird durch die Axial-Positionierung und diese Schubumkehr die Auszugskraft beim Einsatz des Schneidwerkzeugs 10 dazu verwendet, gleichzeitig als Sicherungskraft zu dienen, welche das Schneidwerkzeug 10 über die Axial-Positionierungsfunktionalität in der Sicherungsposition SP hält und frei von axialem Spiel sichert.

Obwohl in der vorstehenden Beschreibung eine gleiche Anzahl von Axial-Sicherungsabschnitten 42 und Kontaktflächen 45 für eine axiale Positionierung beschrieben ist, kann z.B. die Anzahl aber auch unterschiedlich sein. Z.B. kann eine Mehrzahl von Axial-Sicherungsabschnitten 42 und mit diesen zusammenwirkenden Gegen-Sicherungsabschnitten 142 vorgesehen sein, aber auch z.B. nur eine Kontaktfläche 45 und/oder Gegen-Kontaktfläche 145 für die axiale Positionierung.

Obwohl die Kontaktflächen 45 bei dem konkreten Beispiel als gegenüber einem Querschnitt zur Längsachse geneigte Flächen beschrieben wurden und die Gegen-Kontaktflächen 145 als damit zusammenwirkende Vorsprünge, ist z.B. insbesondere auch eine umgekehrte Ausgestaltung denkbar, bei der die Kontaktflächen 45 an Vorsprüngen ausgebildet sind und die Gegen-Kontaktflächen 145 als z.B. geneigte Flächen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichen

- 10: Schneidwerkzeug
- 20: Werkzeugschaft
- 30: Schneidende
- 40: Aufnahmeende
- 42: Axial-Sicherungsabschnitt
- 43: Formschlussfläche
- 44: Axial-Positionierungsabschnitt
- 45: Kontaktfläche

- 100: Werkzeugaufnahmevorrichtung
- 140: Axial-Sicherungsvorrichtung
- 142: Gegen-Sicherungsabschnitt
- 143: Gegen-Formschlussfläche
- 145: Gegen-Kontaktfläche
- 146: Grundkörper
- 147: Befestigungsschnittstelle
- 148: Montageschnittstelle

- 200: Schneidsystem

- SA: Schaftachse
- AR: Auszugsrichtung
- MR: Montagerichtung
- SR: Schneidrichtung
- FP: Freigabeposition
- SP: Sicherungsposition
- α: Positionierungswinkel

## Patentansprüche

1. Schneidsystem (200) für die rotatorische Bearbeitung eines Werkstücks mit einer Axial-Sicherungsvorrichtung (140) und einem Schneidwerkzeug (10), das Schneidwerkzeug (10) aufweisend einen Werkzeugschaft (20) mit einem Schneidende (30) für eine spanende Bearbeitung des Werkstücks und einem Aufnahmeende (40) zur Aufnahme entlang einer Schaftachse (SA) des Werkzeugschaftes (20) in einer Werkzeugaufnahmevorrichtung (100),
wobei das Aufnahmeende (40) mit zumindest einem an einem Außenumfang des Aufnahmeendes (40) ausgebildeten Axial-Sicherungsabschnitt (42) derart versehen ist, dass das Aufnahmeende (40) in einer Freigabeposition entgegen einer Auszugsrichtung (AR) in die Axial-Sicherungsvorrichtung (140) einführbar und durch Rotation um die Schaftachse (SA) in eine Sicherungsposition bewegbar ist, bei der der Axial-Sicherungsabschnitt (42) in einen Gegen-Sicherungsabschnitt (142) der Axial-Sicherungsvorrichtung (140) eingreift für eine Sicherung gegen einen axialen Auszug entlang der Schaftachse (SA) in der Auszugsrichtung (AR), und
**gekennzeichnet durch**
zumindest einen an einer Stirnseite des Aufnahmeendes (40) ausgebildeten Axial-Positionierungsabschnitt (44), der mit einer Gegen-Kontaktfläche (145) der Axial-Sicherungsvorrichtung (140) für eine axiale Positionierung entlang der Schaftachse (SA) in der Auszugsrichtung (AR), derart zusammenwirkt, dass bei Rotation des Schneidwerkzeugs (10) von der Freigabeposition in die Sicherungsposition eine Bewegung des Schneidwerkzeugs (10) entlang der Schaftachse (SA) in der Auszugsrichtung (AR) erfolgt.

2. . Schneidsystem (200) nach Anspruch 1, wobei der zumindest eine Axial-Positionierungsabschnitt (44) wenigstens eine Kontaktfläche (45) aufweist, welche mit einem durch die Schaftachse (SA) als Flächennormale definierten Schaftquerschnitt einen spitzwinkligen Positionierungswinkel (α) aufweist.

3. . Schneidsystem (200) nach Anspruch 2, wobei die Kontaktfläche (45) für eine Kontaktierung mit der Gegen-Kontaktfläche (145) der Axial-Sicherungsvorrichtung (140) der Werkzeugaufnahmevorrichtung (100) ausgebildet ist.

4. . Schneidsystem (200) nach Anspruch 3, wobei die Kontaktfläche (45) als Gleitfläche ausgebildet ist für ein Abgleiten der Gegen-Kontaktfläche (145) der Axial-Sicherungsvorrichtung (140) der Werkzeugaufnahmevorrichtung (100) bei der Positionierungsbewegung.

5. . Schneidsystem (200) nach einem der vorangehenden Ansprüche, wobei der zumindest eine Axial-Sicherungsabschnitt (42) wenigstens eine Formschlussfläche (43) aufweist für einen formschlüssigen Eingriff in eine Gegen-Formschlussfläche (143) des Gegen-Sicherungsabschnitts (142) der Axial-Sicherungsvorrichtung (140) der Werkzeugaufnahmevorrichtung (100).

6. . Schneidsystem (200) nach Anspruch 5, wobei zwischen der Formschlussfläche (43) des Axial-Sicherungsabschnitts (42) und der Kontaktfläche (45) des Axial-Positionierungsabschnitts (44) ein Keilwinkel ausgebildet ist von vorzugsweise spitzer Ausbildung.

7. . Schneidsystem (200) nach einem der vorangehenden Ansprüche, wobei zumindest zwei Axial-Sicherungsabschnitte (42), insbesondere an der Umfangsfläche des Werkzeugschafts (20), angeordnet sind.

8. . Schneidsystem (200) nach einem der vorangehenden Ansprüche, wobei die Axial-Sicherungsvorrichtung (140) einstückig oder im Wesentlichen einstückig mit einer Werkzeugaufnahmevorrichtung (100) ausgebildet ist.

9. . Schneidsystem (200) nach einem der Ansprüche 1 bis 7, wobei die Axial-Sicherungsvorrichtung (140) einen Grundkörper (146) aufweist, welcher separat von einer Werkzeugaufnahmevorrichtung (100) ausgebildet ist, und weiter eine Befestigungsschnittstelle (147) für eine Befestigung in der Werkzeugaufnahmevorrichtung (100) aufweist.

10. . Schneidsystem (200) nach Anspruch 9, wobei der Grundkörper (146) eine Montageschnittstelle (148) aufweist für die Aufnahme eines Befestigungswerkzeugs zur Durchführung einer Befestigungsbewegung.

11. . Verfahren zum Einsetzen eines Schneidwerkzeugs (10) für die rotatorische Bearbeitung eines Werkstücks in eine Axial-Sicherungsvorrichtung (140),
wobei das Schneidwerkzeug (10) aufweist: einen Werkzeugschaft (20) mit einem Schneidende (30) für eine spanende Bearbeitung des Werkstücks und einem Aufnahmeende (40) zur Aufnahme entlang einer Schaftachse (SA) des Werkzeugschaftes (20) in einer Werkzeugaufnahmevorrichtung (100), wobei das Aufnahmeende (40) zumindest einen an einem Außenumfang des Aufnahmeendes (40) ausgebildeten Axial-Sicherungsabschnitt (42) für eine Sicherung gegen einen axialen Auszug entlang der Schaftachse (SA) in einer Auszugsrichtung (AR) und zumindest einen an einer Stirnseite des Aufnahmeendes (40) ausgebildeten Axial-Positionierungsabschnitt (44) für eine axiale Bewegung entlang der Schaftachse (SA) in der Auszugsrichtung (AR) aufweist,
wobei die Axial-Sicherungsvorrichtung aufweist: einen Gegen-Sicherungsabschnitt (142) zum Eingreifen in den Axial-Sicherungsabschnitt (42) des Schneidwerkzeugs (10) zur Sicherung gegen einen axialen Auszug entlang der Schaftachse (SA) des Werkzeugschaftes (20) des Schneidwerkzeugs (10) und eine Gegen-Kontaktfläche (145) zum Zusammenwirken mit dem Axial-Positionierungsabschnitt (44) des Schneidwerkzeugs (10) für eine axiale Bewegung des Schneidwerkzeugs entlang der Schaftachse (SA) in der Auszugsrichtung (AR), wobei das Verfahren die folgenden Schritte aufweist:
- Einführen des Aufnahmeendes (40) des Werkzeugschaftes (20) entlang der Schaftachse (SA) in eine Werkzeugaufnahmevorrichtung (100),
- Einbringen des Axial-Sicherungsabschnitts (42) in den Gegen-Sicherungsabschnitt (142) der Axial-Sicherungsvorrichtung (140),
- Durchführen einer Montagebewegung des Schneidwerkzeugs (10) relativ zur Axial-Sicherungsvorrichtung (140) von einer Freigabeposition (FP) in eine Sicherungsposition (SP),
**dadurch gekennzeichnet, dass**
das Aufnahmeende (40) in der Freigabeposition entgegen der Auszugsrichtung (AR) in die Axial-Sicherungsvorrichtung (140) eingeführt und durch Rotation um die Schaftachse (SA) in die Sicherungsposition bewegt wird, bei der der Axial-Sicherungsabschnitt (42) in den Gegen-Sicherungsabschnitt (142) der Axial-Sicherungsvorrichtung (140) eingreift für eine Sicherung gegen einen axialen Auszug entlang der Schaftachse (SA) in der Auszugsrichtung (AR), und
dass der Axial-Positionierungsabschnitt (44) mit der Gegen-Kontaktfläche (145) der Axial-Sicherungsvorrichtung (140) für eine axiale Positionierung entlang der Schaftachse (SA) in der Auszugsrichtung (AR) derart zusammenwirkt, dass bei Rotation des Schneidwerkzeugs (10) von der Freigabeposition in die Sicherungsposition eine Bewegung des Schneidwerkzeugs (10) entlang der Schaftachse (SA) in der Auszugsrichtung (AR) erfolgt.

## Claims

1. Cutting system (200) for the rotational machining of a workpiece, having an axial securing device (140) and a cutting tool (10), the cutting tool (10) having a tool shank (20) with a cutting end (30) for machining the workpiece and a receiving end (40) to be received in a tool receiving device (100) along a shank axis (SA) of the tool shank (20),
wherein the receiving end (40) is provided with at least one axial securing portion (42), formed on an outer circumference of the receiving end (40), such that the receiving end (40), in a released position, is introducible into the axial securing device (140) counter to a removal direction (AR) and is movable,
by rotation about the shank axis (SA), into a securing position in which the axial securing portion (42) engages in a mating securing portion (142) of the axial securing device (140) for securing counter to axial removal along the shank axis (SA) in the removal direction (AR), and **characterized by**
at least one axial position portion (44) which is formed on an end side of the receiving end (40) and cooperates with a mating contact face (145) of the axial securing device (140), for axial positioning along the shank axis (SA) in the removal position (AR), such that, when the cutting tool (10) is rotated from the released position into the securing position, the cutting tool (10) moves along the shank axis (SA) in the removal direction (AR).

2. Cutting system (200) according to Claim 1, wherein the at least one axial positioning portion (44) has at least one contact face (45), which has an acute positioning angle (α) with a shank cross section defined as a surface normal by the shank axis (SA).

3. Cutting system (200) according to Claim 2, wherein the contact face (45) is designed to come into contact with the mating contact face (145) of the axial securing device (140) of the tool receiving device (100).

4. Cutting system (200) according to Claim 3, wherein the contact face (45) is in the form of a sliding face for the mating contact face (145) of the axial securing device (140) of the tool receiving device (100) to slide over during the positioning movement.

5. Cutting system (200) according to one of the preceding claims, wherein the at least one axial securing portion (42) has at least one form-fitting face (43) for form-fitting engagement in a mating form-fitting face (143) of the mating securing portion (142) of the axial securing device (140) of the tool receiving device (100).

6. Cutting system (200) according to Claim 5, wherein a, preferably acute, wedge angle is formed between the form-fitting face (43) of the axial securing portion (42) and the contact face (45) of the axial positioning portion (44).

7. Cutting system (200) according to one of the preceding claims, wherein at least two axial securing portions (42) are arranged, in particular on the circumferential surface of the tool shank (20) .

8. Cutting system (200) according to one of the preceding claims, wherein the axial securing device (140) is formed in one piece or substantially in one piece with a tool receiving device (100).

9. Cutting system (200) according to one of Claims 1 to 7, wherein the axial securing device (140) has a basic body (146) which is formed separately from a tool receiving device (100), and also has a fastening interface (147) for fastening in the tool receiving device (100).

10. Cutting system (200) according to Claim 9, wherein the basic body (146) has a mounting interface (148) for receiving a fastening tool for carrying out a fastening movement.

11. Method for inserting a cutting tool (10) for the rotational machining of a workpiece into an axial securing device (140),
wherein the cutting tool (10) has: a tool shank (20) with a cutting end (30) for machining the workpiece and a receiving end (40) to be received in a tool receiving device (100) along a shank axis (SA) of the tool shank (20), wherein the receiving end (40) has at least one axial securing portion (42), formed on an outer circumference of the receiving end (40), for securing counter to axial removal along the shank axis (SA) in a removal direction (AR) and at least one axial positioning portion (44), formed on an end side of the receiving end (40), for an axial movement along the shank axis (SA) in the removal direction (AR),
wherein the axial securing device has: a mating securing portion (142) for engaging in the axial securing portion (42) of the cutting tool (10) for securing counter to axial removal along the shank axis (SA) of the tool shank (20) of the cutting tool (10) and a mating contact face (145) for cooperating with the axial positioning portion (44) of the cutting tool (10) for an axial movement of the cutting tool along the shank axis (SA) in the removal direction (AR), wherein the method has the following steps:
- introducing the receiving end (40) of the tool shank (20) along the shank axis (SA) into a tool receiving device (100),
- introducing the axial securing portion (42) into the mating securing portion (142) of the axial securing device (140),
- carrying out a mounting movement of the cutting tool (10) relative to the axial securing device (140) from a released position (FP) into a securing position (SP),
**characterized in that**
the receiving end (40), in the released position, is introduced into the axial securing device (140) counter to the removal direction (AR) and is moved, by rotation about the shank axis (SA), into the securing position in which the axial securing portion (42) engages in the mating securing portion (142) of the axial securing device (140) for securing counter to axial removal along the shank axis (SA) in the removable direction (AR), and
**in that** the axial positioning portion (44) cooperates with the mating contact face (145) of the axial securing device (140), for axial positioning along the shank axis (SA) in the removal direction (AR), such that, when the cutting tool (10) is rotated from the released position into the securing position, the cutting tool (10) is moved along the shank axis (SA) in the removal direction (AR).

## Revendications

1. Système de coupe (200) pour l'usinage rotatif d'une pièce, comprenant un dispositif de blocage axial (140) et un outil de coupe (10), l'outil de coupe (10) présentant une tige d'outil (20) comprenant une extrémité de coupe (30) pour un usinage par enlèvement de copeaux de la pièce et une extrémité de réception (40) pour la réception le long d'un axe de tige (SA) de la tige d'outil (20) dans un dispositif de réception d'outil (100),
dans lequel l'extrémité de réception (40) est pourvue d'au moins une section de blocage axial (42) réalisée sur une périphérie extérieure de l'extrémité de réception (40), de telle sorte que l'extrémité de réception (40) peut être insérée dans le dispositif de blocage axial (140) dans une position de libération à l'encontre d'une direction d'extraction (AR) et peut être déplacée dans une position de blocage par rotation autour de l'axe de tige (SA), la section de blocage axial (42) s'engageant dans une section de blocage antagoniste (142) du dispositif de blocage axial (140) pour bloquer une extraction axiale le long de l'axe de tige (SA) dans la direction d'extraction (AR), et **caractérisé par**
au moins une section de positionnement axial (44) réalisée sur un côté frontal de l'extrémité de réception (40), qui coopère avec une surface de contact antagoniste (145) du dispositif de blocage axial (140) pour un positionnement axial le long de l'axe de tige (SA) dans la direction d'extraction (AR), de telle sorte que, lors d'une rotation de l'outil de coupe (10) de la position de libération à la position de blocage, un mouvement de l'outil de coupe (10) le long de l'axe de tige (SA) dans la direction d'extraction (AR) a lieu.

2. Système de coupe (200) selon la revendication 1, dans lequel l'au moins une section de positionnement axial (44) présente au moins une surface de contact (45), qui présente un angle de positionnement aigu (α) avec une section transversale de tige définie par l'axe de tige (SA) en tant que normale à la surface.

3. Système de coupe (200) selon la revendication 2, dans lequel la surface de contact (45) est réalisée pour venir en contact avec la surface de contact antagoniste (145) du dispositif de blocage axial (140) du dispositif de réception d'outil (100).

4. Système de coupe (200) selon la revendication 3, dans lequel la surface de contact (45) est réalisée en tant que surface de glissement pour un glissement de la surface de contact antagoniste (145) du dispositif de blocage axial (140) du dispositif de réception d'outil (100) lors du mouvement de positionnement.

5. Système de coupe (200) selon l'une quelconque des revendications précédentes, dans lequel l'au moins une section de blocage axial (42) présente au moins une surface de complémentarité de forme (43) pour un engagement par complémentarité de forme dans une surface de complémentarité de forme antagoniste (143) de la section de blocage antagoniste (142) du dispositif de blocage axial (140) du dispositif de réception d'outil (100).

6. Système de coupe (200) selon la revendication 5, dans lequel un angle de coin est formé entre la surface de complémentarité de forme (43) de la section de blocage axial (42) et la surface de contact (45) de la section de positionnement axial (44), de préférence de configuration aiguë.

7. Système de coupe (200) selon l'une quelconque des revendications précédentes, dans lequel au moins deux sections de blocage axial (42) sont agencées, notamment sur la surface périphérique de la tige d'outil (20).

8. Système de coupe (200) selon l'une quelconque des revendications précédentes, dans lequel le dispositif de blocage axial (140) est réalisé d'un seul tenant ou essentiellement d'un seul tenant avec un dispositif de réception d'outil (100).

9. Système de coupe (200) selon l'une quelconque des revendications 1 à 7, dans lequel le dispositif de blocage axial (140) présente un corps de base (146), qui est réalisé séparément d'un dispositif de réception d'outil (100), et présente en outre une interface de fixation (147) pour une fixation dans le dispositif de réception d'outil (100).

10. Système de coupe (200) selon la revendication 9, dans lequel le corps de base (146) présente une interface de montage (148) pour recevoir un outil de fixation pour réaliser un mouvement de fixation.

11. Procédé de mise en place d'un outil de coupe (10) pour l'usinage rotatif d'une pièce dans un dispositif de blocage axial (140),
dans lequel l'outil de coupe (10) présente : une tige d'outil (20) comprenant une extrémité de coupe (30) pour un usinage par enlèvement de copeaux de la pièce et une extrémité de réception (40) pour la réception le long d'un axe de tige (SA) de la tige d'outil (20) dans un dispositif de réception d'outil (100), l'extrémité de réception (40) présentant au moins une section de blocage axial (42) réalisée sur une périphérie extérieure de l'extrémité de réception (40) pour bloquer une extraction axiale le long de l'axe de tige (SA) dans une direction d'extraction (AR) et au moins une section de positionnement axial (44) réalisée sur un côté frontal de l'extrémité de réception (40) pour un mouvement axial le long de l'axe de tige (SA) dans la direction d'extraction (AR),
dans lequel le dispositif de blocage axial présente : une section de blocage antagoniste (142) pour l'engagement dans la section de blocage axial (42) de l'outil de coupe (10) pour bloquer une extraction axiale le long de l'axe de tige (SA) de la tige d'outil (20) de l'outil de coupe (10) et une surface de contact antagoniste (145) pour coopérer avec la section de positionnement axial (44) de l'outil de coupe (10) pour un mouvement axial de l'outil de coupe le long de l'axe de tige (SA) dans la direction d'extraction (AR), le procédé présentant les étapes suivantes :
- l'insertion de l'extrémité de réception (40) de la tige d'outil (20) le long de l'axe de tige (SA) dans un dispositif de réception d'outil (100),
- l'introduction de la section de blocage axial (42) dans la section de blocage antagoniste (142) du dispositif de blocage axial (140),
- la réalisation d'un mouvement de montage de l'outil de coupe (10) par rapport au dispositif de blocage axial (140) d'une position de libération (FP) à une position de blocage (SP),
**caractérisé en ce que**
l'extrémité de réception (40) est insérée dans le dispositif de blocage axial (140) dans la position de libération à l'encontre de la direction d'extraction (AR) et est déplacée dans la position de blocage par rotation autour de l'axe de tige (SA), la section de blocage axial (42) s'engageant dans la section de blocage antagoniste (142) du dispositif de blocage axial (140) pour bloquer une extraction axiale le long de l'axe de tige (SA) dans la direction d'extraction (AR), et
**en ce que** la section de positionnement axial (44) coopère avec la surface de contact antagoniste (145) du dispositif de blocage axial (140) pour un positionnement axial le long de l'axe de tige (SA) dans la direction d'extraction (AR) de telle sorte que, lors d'une rotation de l'outil de coupe (10) de la position de libération à la position de sécurité, un mouvement de l'outil de coupe (10) le long de l'axe de tige (SA) dans la direction d'extraction (AR) a lieu.
